# NEUE EUROPÄISCHE PATENTSCHRIFT

(11) **EP 2 561 324 B2**
(45) Veröffentlichungstag und Bekanntmachung des Hinweises auf die Entscheidung über den Einspruch: **30.09.2020**
(45) Hinweis auf die Patenterteilung: 10.05.2017
(21) Anmeldenummer: 11713291.0
(22) Anmeldetag: 11.04.2011
(51) Int. Cl.: G01K 1/20

(54) **VORRICHTUNG ZUR ERMITTLUNG DER TEMPERATUR IM INNENRAUM EINES FAHRZEUGS**
DEVICE FOR DETERMINING THE TEMPERATURE IN THE INTERIOR OF A VEHICLE
DISPOSITIF POUR DÉTERMINER LA TEMPÉRATURE DANS L'ESPACE INTÉRIEUR D'UN VÉHICULE

(30) Priorität: 20.04.2010 DE 102010015657
(43) Veröffentlichungstag der Anmeldung: 27.02.2013
(73) Patentinhaber: Valeo Schalter und Sensoren GmbH, 74319 Bietigheim-Bissingen (DE)
(72) Erfinder: HENTSCHEL, Joachim, 96479 Weitramsdorf (DE); FINDEISEN, Thomas, 96450 Coburg (DE); MUELLER, Otto, 96145 Sesslach (DE)
(74) Vertreter: Pothmann, Karsten
(86) Internationale Anmeldenummer: PCT/EP2011/055589
(87) Internationale Veröffentlichungsnummer: WO 2011/131500

(56) Entgegenhaltungen:
- EP-A2- 2 037 239
- DE-A1-102004 009 605
- DE-B3- 10 312 077
- DE-C- 244 774

## Beschreibung

Die Erfindung betrifft eine Vorrichtung zur Ermittlung der Temperatur im Innenraum eines Fahrzeugs nach der im Oberbegriff des Anspruchs 1 genannten Art.

Aus dem Stand der Technik sind Klimaanlagen für Fahrzeuge bekannt, welche eine Innenraumtemperatur des Fahrzeugsübereinen Temperatursensor ermittelt, der die Temperatur eines Luftstroms in einem Kanal ermittelt, wobei der Luftstrom im Kanal durch einen Belüftungsmotor erzeugt wird. Zur Vermeidung des Belüftungsmotors werden in modernen Fahrzeugen unbelüftete Vorrichtungen zur Ermittlung der Temperatur im Innenraum eines Fahrzeuges verwendet.

In der geänderten Patentschrift DE 100 49 979 CS wird beispielsweise eine solche unbelüftete Vorrichtung zur Ermittlung der Temperatur im Innenraum eines Fahrzeugs beschrieben. Die beschriebene Vorrichtung umfasst einen ersten Temperaturfühler, welcher hinter einer an den Innenraum angrenzenden Wand angeordnet ist, eine Verarbeitungseinheit, welche das Messsignal des Temperaturfühlers empfängt und ein die Temperatur im Innenraum des Fahrzeugs repräsentierendes Ausgangssignal ausgibt, ein Wärmeleitelement, welches die Temperatur der Luft des Innenraums innerhalb von dessen wandnahen Bereich erfasst, und einen ersten Sonnensensor, welcher in der Öffnung der Wand angeordnet ist. Des Weiteren steht das Wärmeleitungselement in Wärmeleitkontakt mit dem Temperaturfühler und erstreckt sich durch eine Öffnung in der Wand. Zudem weist der erste Sonnensensor ein Gehäuse auf, in welchem eine Fußdiode und zu dieser führende Elektroden angeordnet sind, wobei das Wärmeleitungselement allein durch eine der Elektroden gebildet wird.

In der Patentschrift EP 1 457 365 B1 wird eine Vorrichtung zur Erfassung der Temperatur im Innenraum eines Fahrzeugs, insbesondere für eine Klimaanlage eines Fahrzeugs beschrieben. Die beschriebene Vorrichtung umfasst einen Innenraumtemperatursensor, welcher in einem Gehäuse angeordnet ist, das in oder an einer an den Innenraum des Fahrzeugs angrenzenden Wand angeordnet ist und zumindest teilweise an den Innenraum des Fahrzeugs angrenzt, einen Kompensationstemperatursensor, welcher hinter der Wand und von dem Innenraumtemperatursensor thermisch entkoppelt angeordnet ist und Wärme von Luft und/oder Baugruppen hinter der Wand erfasst, welche zu einer Verfälschung des Messwertes des Innenraumtemperatursensors führen kann, und einen Strahlungssensor, welcher zur Erwärmung des Gehäuses des Innenraumtemperatursensors führende Sonnenstrahlung erfasst. Hierbei sind die beiden Temperatursensoren und der Strahlungssensor zu einer gemeinsamen Baugruppe zusammengefasst.

Aus der EP 1 457 365 B1 ist eine Vorrichtung zur Erfassung der Temperatur im Innenraum eines Fahrzeuges bekannt. Diese Vorrichtung weist einen ersten Temperatursensor sowie einen Strahlungssensor auf. Des Weiteren ist ein Kompensationstemperatursensor vorgesehen, welcher unter einer wärmeisolierenden Vergussmasse vorgesehen ist.

In der Patentschrift DE 103 12 077 B3 wird eine Vorrichtung zur Ermittlung der Temperatur in einem Raum mit einer zumindest in Teilen für Sonnenstrahlung durchlässigen Begrenzungswand, insbesondere im Innenraum eines Fahrzeuges beschrieben. Die beschriebene Vorrichtung ist mit einem ersten Temperaturfühler zur Erfassung der Temperatur in dem den ersten Temperaturfühler umgebenden oder daran angrenzenden Messbereich des Raums versehen. Ferner weist die Vorrichtung einen Sonnensensor zur Ermittlung der Sonnenstrahlung, der der Messbereich des Raums ausgesetzt ist, auf. Der erste Temperaturfühler und der Sonnensensor sind in einem gemeinsamen Gehäuse angeordnet. Eine Verarbeitungseinheit empfängt die Messsignale von dem ersten Temperaturfühler und dem Sonnensensor und gibt ein die Temperatur im Messbereich und/oder Raum repräsentierendes Ausgangssignal aus.

Aufgabe der Erfindung ist es, eine Vorrichtung zur Ermittlung der Temperatur im Innenraum eines Fahrzeugs der im Oberbegriff des Anspruchs 1 genannten Art mit einer ersten Sensorgruppe und einer zweiten Sensorgruppe dahingehend weiterzuentwickeln, dass eine kostengünstige und einfache Verbesserung der Wärmeisolation der ersten Sensorbaugruppe ermöglicht wird.

Diese Aufgabe wird erfindungsgemäß durch eine Vorrichtung zur Ermittlung der Temperatur im Innenraum eines Fahrzeugs mit den Merkmalen des Anspruchs 1 gelöst. Weitere die Ausführungsformen der Erfindung in vorteilhafter Weise ausgestaltende Merkmale enthalten die Unteransprüche.

Der mit der Erfindung erzielte Vorteil besteht darin, dass durch das zweite Gehäuse und die zwischen den Oberflächen der Trägerplatine und den korrespondierenden Wänden des zweiten Gehäuses vorhandenen Luftschichten die Wärmeisolation der ersten Sensorbaugruppe auf einfache Weise verbessert werden kann.

Zudem kann durch Ausführungsformen der vorliegenden Erfindung die thermische Entkopplung zwischen der ersten Sensorbaugruppe und weiteren Temperatursensoren verbessert werden, die beispielsweise in einer erfindungsgemäßen Vorrichtung zur Ermittlung der Temperatur im Innenraum eines Fahrzeugs zur Korrektur der mit der ersten Sensorbaugruppe erfassten Innenraumtemperatur verwendet werden.

In anderen Worten ausgedrückt, Ausführungsformen der Erfindung ermöglichen eine bessere Entkoppelung und Kompensation der Temperatureinflüsse im Bereich eines Innenraumtemperatursensors, durch eine kompakte Bauweise. Des Weiteren kann mit einer Bilanzierung von Ausblastemperaturen und Ausblasmengen einer zugehörigen Klimaanlage, eine Verbesserung im dynamischen Verhalten der ersten Sensorbaugruppe erzielt werden. Mit diesen technischen Verbesserungen kann somit die adaptive Anpassung des Systems erfolgen.

Die erste Sensorbaugruppe zur Erfassung der Temperatur im Innenraum eines Fahrzeugs umfasst einen Temperatursensor zur Erfassung der Innenraumtemperatur und einen Strahlungsensor zur Erfassung einer Sonneneinstrahlung, wobei vom Strahlungssensor bereitgestellte Informationen zur Korrektur der vom Temperatursensor erfassten Innenraumtemperatur verwendet werden, und wobei der Temperatursensor und der Strahlungsensor in einem gemeinsamen ersten Gehäuse angeordnet und über erste Kontaktelemente mit Leiterbahnen einer Trägerplatine elektrisch kontaktiert sind. Es ist ferner ein zweites Gehäuse vorgesehen, welches zumindest die ersten Kontaktelemente und die Trägerplatine so umgibt, dass zwischen den Oberflächen der Trägerplatine und korrespondierenden Wänden des zweiten Gehäuses jeweils eine Luftschicht zur Temperaturisolation vorhanden ist.

Die erfindungsgemäße Vorrichtung zur Ermittlung der Temperatur im Innenraum eines Fahrzeugs umfasst einen ersten Temperatursensor zur Erfassung der Innenraumtemperatur, einen zweiten Temperatursensor zur Erfassung der Temperatur eines Luftstroms und/oder von Baugruppen im Umfeld des ersten Temperatursensors und einen Strahlungsensor zur Erfassung der Sonneneinstrahlung, wobei vom zweiten Temperatursensor und/oder Strahlungssensor bereitgestellte Informationen zur Korrektur der vom ersten Temperatursensor erfassten Innenraumtemperatur verwendet werden, und wobei der erste Temperatursensor und der Strahlungsensor in einem gemeinsamen Gehäuse angeordnet und über erste Kontaktelemente mit Leiterbahnen einer ersten Trägerplatine elektrisch kontaktiert sind. Dabei sind der erste Temperatursensor und der Strahlungsensor als Teile einer ersten Sensorbaugruppe ausgeführt. Hierbei erfolgt die Temperaturerfassung und Verarbeitung mittels des ersten Temperatursensors und des beispielsweise als Fotodiode ausgeführten Strahlungssensors, wobei der als Fotodiode ausgeführte Strahlungssensor zur Kompensation des Sonneneinflusses eingesetzt wird. Der zweite Temperatursensor wird zur Kompensation der Temperatureinflüsse auf der ersten Trägerplatte der zweiten Sensorbaugruppe eingesetzt. Der Grundgedanke der Erfindung basiert auf der Verbesserung der thermischen Entkopplung der ersten Sensorbaugruppe. Der zweite Temperatursensor ist erfindungsgemäss ausserhalb des zweiten Gehäuses angeordnet.

In vorteilhafter Ausgestaltung der ersten Sensorbaugruppe ist die Trägerplatine über zweite Kontaktelemente mit mindestens einer Steuerplatine elektrisch verbunden, auf welcher eine Auswerte- und Steuerschaltung angeordnet ist. Die zweiten Kontaktelemente sind beispielsweise als Steckstifte ausgeführt, welche in vorteilhafter Weise über korrespondierende Kontaktaufnahmeelemente eine einfache elektrische und mechanische Verbindung mit der Steuerplatine ermöglichen.

In weiterer vorteilhafter Ausgestaltung der ersten Sensorbaugruppe sind die Leiterbahnen mäanderförmig und/oder schleifenförmig zumindest auf einer Oberfläche der Trägerplatine angeordnet. Durch diese Verlängerung der Leiterbahnen wird die thermische Abkoppelung der ersten Sensorbaugruppe von Störeinflüssen weiter verbessert und der Temperatureinfluss minimiert.

Bei einer erfindungsgemäßen Vorrichtung erfasst der zweite Temperatursensor die Temperatur eines Luftstroms in einem im Wesentlichen abgeschlossenen Sensorraum, welcher das zweite Gehäuse zumindest teilweise umgibt. Der zweite Temperatursensor ist in vorteilhafter Weise auf einer zweiten Trägerplatine angeordnet und mit Leiterbahnen elektrisch kontaktiert. Auch hier sind die Leiterbahnen mäanderförmig und/oder schleifenförmig zumindest auf einer Oberfläche der zweiten Trägerplatine angeordnet, um die thermische Entkopplung zur Sensorbaugruppe zu verbessern. Der Sensorraum ist beispielsweise seitlich durch mindestens eine Begrenzungswand begrenzt. Zur Ermittlung der von der mindestens einen Begrenzungswand verursachten Temperatureinflüsse ist die zweite Trägerplatine über mindestens eine Übergangsfläche mit der mindestens einen Begrenzungswand des Sensorraums thermisch gekoppelt.

In weiterer vorteilhafter Ausgestaltung der erfindungsgemäßen Vorrichtung ist die zweite Trägerplatine über dritte Kontaktelemente mit mindestens einer Steuerplatine elektrisch verbunden, auf welcher eine Auswerte- und Steuerschaltung angeordnet ist. Die Funktion der Auswerte- und Steuerschaltung besteht im Wesentlichen darin, die Messsignale der verschiedenen Sensoren zu empfangen und auszuwerten, um die aktuelle Temperatur im Innenraum des Fahrzeugs zu ermitteln. Die dritten Kontaktelemente sind beispielsweise als Steckstifte ausgeführt, welche in vorteilhafter Weise über korrespondierende Kontaktaufnahmeelemente eine einfache elektrische und mechanische Verbindung mit der Steuerplatine ermöglichen. Zudem kann die zweite Trägerplatine mechanisch mit dem zweiten Gehäuse der Sensorbaugruppe verbunden sein, um eine Montageeinheit zu bilden. Die mechanischen Verbindungsmittel sind beispielsweise als korrespondierende Rastelemente ausgeführt.

Nachfolgend wird ein Ausführungsbeispiel der Erfindung anhand einer zeichnerischen Darstellung näher erläutert.

In der Darstellung zeigt:
- Fig. 1: eine schematische Perspektivdarstellung eines Ausführungsbeispiels einer ersten Sensorbaugruppe zur Erfassung der Temperatur im Innenraum eines Fahrzeugs ohne ein zweites Gehäuse und einer zweiten Sensorbaugruppe, welche jeweils Teil einer erfindungsgemäßen Vorrichtung zur Ermittlung der Temperatur im Innenraum eines Fahrzeugs sind.
- Fig. 2: eine schematische Perspektivdarstellung des Ausführungsbeispiels der ersten Sensorbaugruppe zur Erfassung der Temperatur im Innenraum eines Fahrzeugs mit dem zweitem Gehäuse und der zweiten Sensorbaugruppe, welche jeweils Teil der erfindungsgemäßen Vorrichtung zur Ermittlung der Temperatur im Innenraum eines Fahrzeugs sind.
- Fig. 3: eine schematische Draufsicht eines Ausführungsbeispiels einer erfindungsgemäßen Vorrichtung zur Ermittlung der Temperatur im Innenraum eines Fahrzeugs im eingebauten Zustand.
- Fig. 4: eine erste Schnittdarstellung des Ausführungsbeispiels der erfindungsgemäßen Vorrichtung zur Ermittlung der Temperatur im Innenraum eines Fahrzeugs aus Fig. 3.
- Fig. 5: eine zweite Schnittdarstellung des Ausführungsbeispiels der erfindungsgemäßen Vorrichtung zur Ermittlung der Temperatur im Innenraum eines Fahrzeugs aus Fig. 3.
- Fig. 6: eine dritte Schnittdarstellung des Ausführungsbeispiels der erfindungsgemäßen Vorrichtung zur Ermittlung der Temperatur im Innenraum eines Fahrzeugs aus Fig. 3.

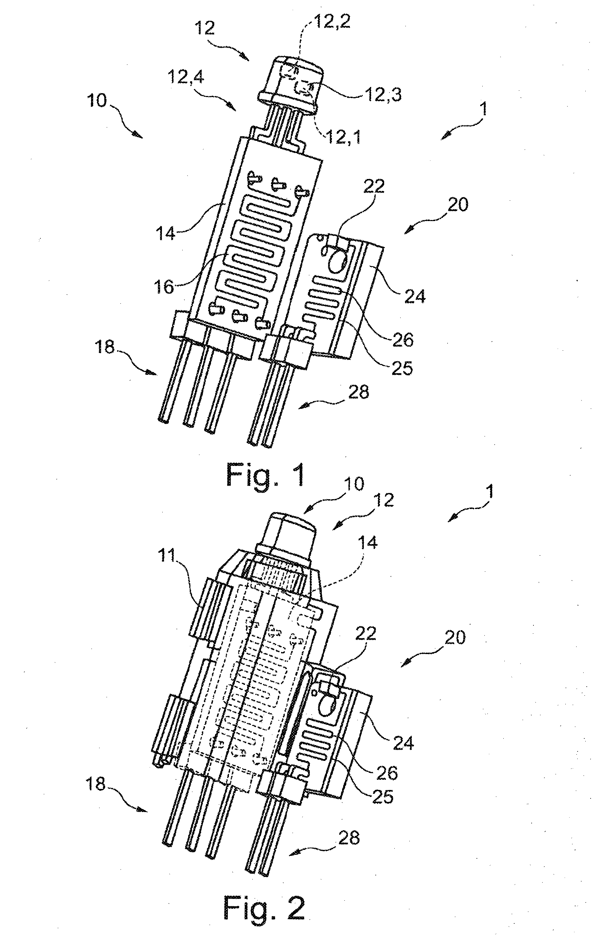

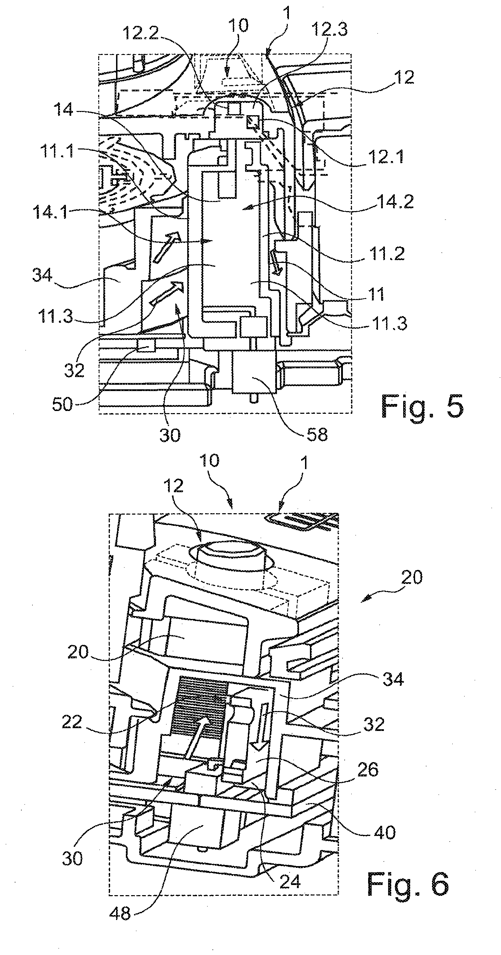

Wie aus Fig. 1 bis 6 ersichtlich ist, umfasst ein Ausführungsbeispiel einer erfindungsgemäßen Vorrichtung 1 zur Ermittlung der Temperatur im Innenraum eines Fahrzeugs eine erste Sensorbaugruppe 10 zur Erfassung der Temperatur im Innenraum eines Fahrzeugs, welche einen ersten Temperatursensor 12.1 zur Erfassung der Innenraumtemperatur und einen Strahlungsensor 12.2 zur Erfassung einer Sonneneinstrahlung umfasst, und eine zweite Sensorbaugruppe 20 mit einem zweiten Temperatursensor 22 zur Erfassung der Temperatur eines Luftstroms 32 und/oder von Baugruppen 34 im Umfeld des ersten Temperatursensors 12.1.

Wie aus Fig. 1 bis 6 weiter ersichtlich ist, sind der erste Temperatursensor 12.1 und der Strahlungsensor 12.2 in einem gemeinsamen Gehäuse 12.3 angeordnet und über erste Kontaktelemente 12.4 mit Leiterbahnen 16 einer ersten Trägerplatine 14 elektrisch kontaktiert. Der zweite Temperatursensor 22 ist auf einer zweiten Trägerplatine 24 angeordnet und ebenfalls mit Leiterbahnen 26 elektrisch kontaktiert. Wie aus Fig. 1 und 2 weiter ersichtlich ist, kann die erste Trägerplatine 14 über zweite Kontaktelemente 18 und die zweite Trägerplatine 24 über dritte Kontaktelemente 28 mit mindestens einer Steuerplatine elektrisch verbunden werden, auf welcher eine nicht dargestellte Auswerte- und Steuerschaltung angeordnet ist. Die Auswerte- und Steuerschaltung empfängt die Messsignale der verschiedenen Sensoren und wertet die empfangen Signale aus, um die aktuelle Temperatur im Innenraum des Fahrzeugs zu ermitteln.

Dabei ist ein zweites Gehäuse 11 vorgesehen, welches zumindest die ersten Kontaktelemente 12.4 und die erste Trägerplatine 14 so umgibt, dass zwischen Oberflächen 14.1, 14.2 der Trägerplatine 14 und korrespondierenden Wänden 11.1, 11.2 des zweiten Gehäuses 11 jeweils eine Luftschicht zur Temperaturisolation vorhanden ist.

Die vom zweiten Temperatursensor 22 und/oder dem Strahlungssensor 12.2 bereitgestellten Informationen werden zur Korrektur der vom ersten Temperatursensor 12.1 erfassten Innenraumtemperatur verwendet. Wie insbesondere aus Fig. 1 und 2 ersichtlich ist, sind die Leiterbahnen 16 auf den Oberflächen 14.1, 14.2 der ersten Trägerplatine 14 und die Leiterbahnen 26 auf den Oberflächen der zweiten Trägerplatine 24 mäanderförmig und/oder schleifenförmig angeordnet, um die thermische Entkopplung zwischen den Temperatursensoren 12.1, 22 weiter zu verbessern.

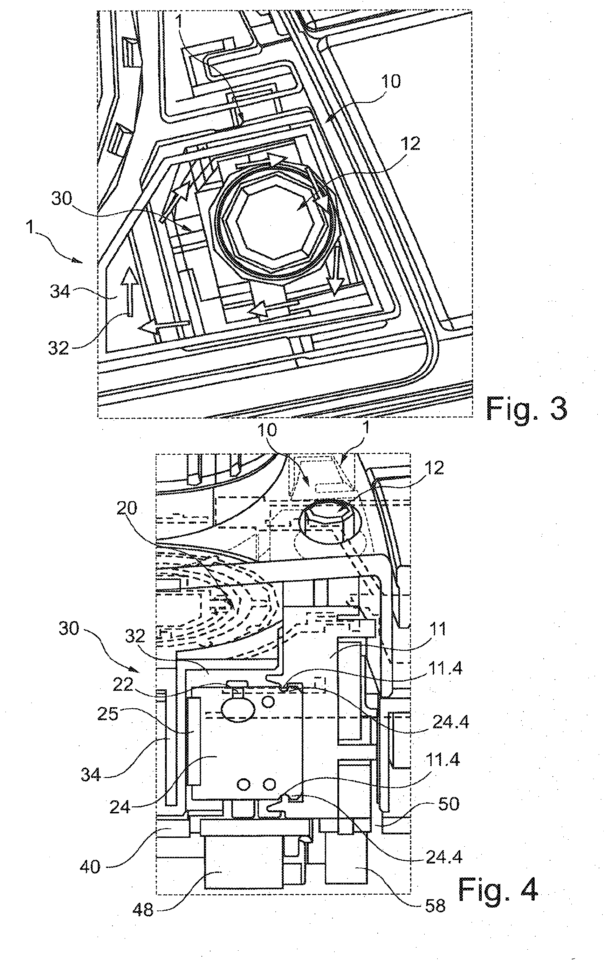

Wie insbesondere aus Fig. 3 bis 6 ersichtlich ist, erfasst der zweite Temperatursensor 22 der erfindungsgemäßen Vorrichtung 1 im dargestellten Ausführungsbeispiel zum Einen die Temperatur eines Luftstroms 32 in einem im Wesentlichen abgeschlossenen Sensorraum 30, welcher das zweite Gehäuse 11 zumindest teilweise umgibt, und zum Anderen durch eine thermische Koppelung über mindestens eine Übergangsfläche 25 die Temperatur von mindestens einer Begrenzungswand 34 des Sensorraums 30. Die zweite Sensorbaugruppe 20 dient zur Ermittlung der thermischen Umgebungsbedienungen der ersten Sensorbaugruppe 10. Der zweite Temperatursensor 22 ist mit der zweiten Trägerplatine 24 elektrisch kontaktiert, welche durch die langen und dünnen Leiterbahnen 26 eine thermische Entkopplung erzielt. Ebenfalls ermittelt die zweite Sensorbaugruppe 20 den Wärmeeintrag durch die Wand zur ersten Sensorbaugruppe 10 mittels einer aufgebrachten dicken Leiterbahn 25, welche formschlüssig in ein weiteres Gehäuse 34 geklemmt ist.

Wie aus Fig. 2 und 4 weiter ersichtlich ist, ist die zweite Trägerplatine 24 mechanisch mit dem zweiten Gehäuse 11 der ersten Sensorbaugruppe 10 verbunden. Im dargestellten Ausführungsbeispiel sind die mechanischen Verbindungsmittel als korrespondierende Rastelemente 11.4, 24.4, wie beispielsweise als Rastnase 11.4 bzw. korrespondierende Rastmulde 24.4 ausgeführt, wobei auch andere Verbindungsarten, wie beispielsweise eine Clipsverbindung usw. vorstellbar sind.

Die nicht dargestellte auf der mindestens einen Steuerplatine 40, 50 angeordnete Auswerte- und Steuerschaltung empfängt über die elektrischen Kontaktelemente 18, bzw. 28 und korrespondierende Kontaktaufnahmeelemente 48, 58 die von den Temperatursensoren 12.1, 22 erfassten Temperaturwerte und die vom Strahlungssensor 12.2 erfassten Strahlungswerte und ermittelt daraus die aktuelle Innenraumtemperatur und gibt diese beispielsweise über ein Fahrzeugbussystem an die Auswerte- und Steuereinheit der Klimaanlage und/oder andere Anwendungen im Fahrzeug weiter.

## Patentansprüche

1. Vorrichtung zur Ermittlung der Temperatur im Innenraum eines Fahrzeugs, mit einer ersten Sensorbaugruppe (10) mit einem ersten Temperatursensor (12.1) zur Erfassung der Innenraumtemperatur und einem Strahlungssensor (12.2) zur Erfassung einer Sonneneinstrahlung, und einer zweiten Sensorbaugruppe (20) mit einem zweiten Temperatursensor (22) zur Erfassung der Temperatur eines Luftstroms (32) und/oder von Baugruppen (34) im Umfeld des ersten Temperatursensors (12.1), wobei vom zweiten Temperatursensor (22) und/oder Strahlungssensor (12.2) bereitgestellte Informationen zur Korrektur der vom ersten Temperatursensor (12.1) erfassten Innenraumtemperatur verwendbar sind, wobei der erste Temperatursensor (12.1) und der Strahlungsensor (12.2) in einem gemeinsamen ersten Gehäuse (12.3) angeordnet und über erste Kontaktelemente (12.4) mit Leiterbahnen (16) einer ersten Trägerplatine (14) elektrisch kontaktiert sind, und wobei ein zweites Gehäuse (11) zumindest die ersten Kontaktelemente (12.4) und die Trägerplatine (14) so umgibt, dass zwischen Oberflächen (14.1, 14.2) der Trägerplatine (14) und korrespondierenden Wänden (11.1, 11.2) des zweiten Gehäuses (11) jeweils eine Luftschicht vorhanden ist,
**dadurch gekennzeichnet, dass** der zweite Temperatursensor (22) die Temperatur eines Luftstroms (32) in einem im Wesentlichen abgeschlossenen Sensorraum (30) erfasst, welcher das zweite Gehäuse (11) zumindest teilweise umgibt, wobei der zweite Temperatursensor (22) außerhalb des zweiten Gehäuses (11) angeordnet ist.

2. Vorrichtung nach Anspruch 1,
**dadurch gekennzeichnet,**
**dass** der zweite Temperatursensor (22) auf einer zweiten Trägerplatine (24) angeordnet und mit Leiterbahnen (26) elektrisch kontaktiert ist.

3. Vorrichtung nach Anspruch 2,
**dadurch gekennzeichnet,**
**dass** die Leiterbahnen (26) mäanderförmig und/oder schleifenförmig zumindest auf einer Oberfläche der zweiten Trägerplatine (24) angeordnet sind.

4. Vorrichtung nach einem der vorgehenden Ansprüche,
**dadurch gekennzeichnet,**
**dass** der Sensorraum (30) seitlich durch mindestens eine Begrenzungswand (34) begrenzt ist.

5. Vorrichtung nach einem der vorgehenden Ansprüche,
**dadurch gekennzeichnet,**
**dass** die zweite Trägerplatine (24) über mindestens eine Übergangsfläche (25) mit mindestens einer Begrenzungswand (34) des Sensorraums (30) thermisch gekoppelt ist.

6. Vorrichtung nach einem der vorgehenden Ansprüche,
**dadurch gekennzeichnet,**
**dass** die zweite Trägerplatine (24) über dritte Kontaktelemente (28) mit mindestens einer Steuerplatine (40, 50) elektrisch verbunden ist, auf welcher eine Auswerte- und Steuerschaltung angeordnet ist.

7. Vorrichtung nach einem der vorherigen Ansprüche 2 bis 6,
**dadurch gekennzeichnet,**
**dass** die zweite Trägerplatine (24) mechanisch mit dem zweiten Gehäuse (11) verbunden ist.

8. Vorrichtung nach Anspruch 7,
**dadurch gekennzeichnet,**
**dass** die mechanischen Verbindungsmittel als korrespondierende Rastelemente (11.4, 24.4) ausgeführt sind.

## Claims

1. Device for determining the temperature in the interior of a vehicle, having a first sensor module (10) having a first temperature sensor (12.1) for acquiring the interior temperature and a radiation sensor (12.2) for acquiring an insolation, and a second sensor module (20) having a second temperature sensor (22) for acquiring the temperature of an air stream (32) and/or of modules (34) in the surroundings of the first temperature sensor (12.1), it being possible to use information provided by the second temperature sensor (22) and/or radiation sensor (12.2) to correct the interior temperature acquired by the first temperature sensor (12.1), the first temperature sensor (12.1) and the radiation sensor (12.2) being arranged in a common first housing (12.3) and making electrical contact with conductor tracks (16) of a first carrier board (14) via first contact elements (12.4), and a second housing (11) surrounding at least the first contact elements (12.4) and the carrier board (14) so that an air layer is respectively present between surfaces (14.1, 14.2) of the carrier board (14) and corresponding walls (11.1, 11.2) of the second housing (11),
**characterized in that** the second temperature sensor (22) acquires the temperature of an air stream (32) in a substantially sealed sensor space (30) which surrounds the second housing (11) at least in part, the second temperature sensor (22) being arranged outside the second housing (11).

2. Device according to Claim 1,
**characterized**
**in that** the second temperature sensor (22) is arranged on a second carrier board (24) and makes electrical contact with conductor tracks (26).

3. Device according to Claim 2,
**characterized**
**in that** the conductor tracks (26) are arranged meanderingly and/or in looped fashion at least on a surface of the second carrier board (24).

4. Device according to one of the preceding claims,
**characterized**
**in that** the sensor space (30) is laterally bounded by at least one boundary wall (34).

5. Device according to one of the preceding claims,
**characterized**
**in that** the second carrier board (24) is thermally coupled to at least one boundary wall (34) of the sensor space (30) via at least one transition surface (25).

6. Device according to one of the preceding claims,
**characterized**
**in that** the second carrier board (24) is electrically connected via third contact elements (28) to at least one control board (40, 50) on which an evaluation and control circuit is arranged.

7. Device according to one of the preceding Claims 2 to 6,
**characterized**
**in that** the second carrier board (24) is mechanically connected to the second housing (11).

8. Device according to Claim 7,
**characterized**
**in that** the mechanical connecting means are designed as corresponding catch elements (11.4, 24.4).

## Revendications

1. Dispositif pour déterminer la température à l'intérieur d'un véhicule, comportant un premier module à capteurs (10) ayant un premier capteur de température (12.1) destiné à détecter la température intérieure et un capteur de rayonnement (12.2) destiné à détecter un rayonnement solaire, et un deuxième module à capteurs (20) comportant un deuxième capteur de température (22) destiné à détecter la température d'un flux d'air (32) et/ou de modules (34) dans l'environnement du premier capteur de température (12.1), dans lequel des informations fournies par le deuxième capteur de température (22) et/ou par le capteur de rayonnement (12.2) peuvent être utilisées pour corriger la température intérieure détectée par le premier capteur de température (12.1), dans lequel le premier capteur de température (12.1) et le capteur de rayonnement (12.2) sont disposés dans un premier boîtier commun (12.3) et sont électriquement mis en contact par l'intermédiaire de premiers éléments de contact (12.4) avec des pistes conductrices (16) d'une première carte de support (14), et dans lequel un deuxième boîtier (11) entoure au moins les premiers éléments de contact (12.4) et la carte de support (14) de manière à ce qu'une couche d'air soit respectivement présente entre des surfaces (14.1, 14.2) de la carte de support (14) et des parois correspondantes (11.1, 11.2) du deuxième boîtier (11),
**caractérisé en ce que** le deuxième capteur de température (22) détecte la température d'un flux d'air (32) dans un espace de capteur (30) sensiblement fermé, qui entoure au moins en partie le deuxième boîtier (11), le deuxième capteur de température (22) étant disposé à l'extérieur du deuxième boîtier (11).

2. Dispositif selon la revendication 1,
**caractérisé en ce que** le deuxième capteur de température (22) est disposé sur une deuxième carte de support (24) et est en contact électrique avec des pistes conductrices (26).

3. Dispositif selon la revendication 2,
**caractérisé en ce que** les pistes conductrices (26) sont disposées de façon sinueuse et/ou sous la forme de boucles sur au moins une surface de la deuxième carte de support (24).

4. Dispositif selon l'une quelconque des revendications précédentes,
**caractérisé en ce que**
l'espace de capteur (30) est délimité latéralement par au moins une paroi de délimitation (34).

5. Dispositif selon l'une quelconque des revendications précédentes,
**caractérisé en ce que**
la deuxième carte de support (24) est couplée thermiquement, par l'intermédiaire d'au moins une interface (25), à au moins une paroi de délimitation (34) de l'espace de capteur (30).

6. Dispositif selon l'une quelconque des revendications précédentes,
**caractérisé en ce que**
la deuxième carte de support (24) est reliée électriquement, par l'intermédiaire de troisièmes éléments de contact (28), à au moins une carte de commande (40, 50) sur laquelle est disposé un circuit d'évaluation et de commande.

7. Dispositif selon l'une quelconque des revendications 2 à 6 précédentes,
**caractérisé en ce que**
la deuxième carte de support (24) est reliée mécaniquement au deuxième boîtier (11).

8. Dispositif selon la revendication 7,
**caractérisé en ce que**
les moyens de liaison mécaniques sont réalisés sous la forme d'éléments d'encliquetage correspondants (11.4, 24.4).
